# EUROPEAN PATENT SPECIFICATION

(11) **EP 1 679 286 B1**
(45) Date of publication and mention of the grant of the patent: **11.02.2009**
(21) Application number: 04766945.2
(22) Date of filing: 17.09.2004
(51) Int. Cl.: C01B 39/40

(54) **METHOD OF PREPARING NANO-ZEOLITE ZSM-5 HAVING AN INCREASED OUTER SURFACE BY CRYSTALLISATION OF SILYLATED NUCLEI**
VERFAHREN ZUR HERSTELLUNG VON NANO-ZEOLITH ZSM-5 MIT VERGRÖSSERTER AUSSENOBERFLÄCHE DURCH KRISTALLISATION VON SILYLIERTEN KEIMEN
METHODE DE PREPARATION D'UNE NANOZEOLITE ZDM-5 DE SURFACE EXTERNE IMPORTANTE PAR CRISTALLISATION DE NOYAUX SILYLES

(30) Priority: 18.09.2003 ES 200302178
(43) Date of publication of application: 12.07.2006
(73) Proprietor: Universidad Rey Juan Carlos, 28933 Mostoles (Madrid) (ES)
(72) Inventor: AGUADO ALONSO, J. Universidad Rey Juan Carlos, E-28933 Mostoles (ES); SERRANO GRANADOS, D. Universidad Rey Juan Carlos, E-28933 Mostoles (ES); ESCOLA SAEZ, J. M. Universidad Rey Juan Carlos, E-28933 Mostoles (ES); RODRIGUEZ MUNOZ, J.M. Universidad Rey Juan Carlos, E-28933 Mostoles (ES)
(74) Representative: Carvajal y Urquijo, Isabel
(86) International application number: PCT/ES2004/000407
(87) International publication number: WO 2005/026050

(56) References cited:
- EP-A1- 1 284 237
- EP-A2- 1 394 113
- WO-A1-01/38223
- MADSEN ET AL.: 'Nanosized seolite crystals, convenient control of crystal size distribution' CHEMICAL COMMUNICATIONS vol. 8, 1999, pages 673 - 674, XP002184343

## Description

### FIELD OF THE INVENTION

The invention relates to a process of preparing nano-zeolite ZSM-5 having an increased outer surface, comprising the steps of preparing a synthesis mixture with a zeolite ZSM-5 precursor composition, silylating the mixture, said silylation involving the addition of, and reaction with, a silylating agent at a molar concentration of between 0.1 and 15% in relation to the total silicon and aluminum content; crystallizing at 70-200°C; and separating the solid by means of centrifugation, filtration or evaporation of the solvent.

### STATE OF THE ART

Zeolites are microporous crystalline aluminosilicates the general formula of which is as follows:
Me_{2/n}O; Al₂O₃; x SiO₂; y H₂O (Me= metallic cation; n= metallic cation valence; x > 2; y > 1)

Zeolites have a three-dimensional structure formed by SiO₄ and AlO₄ tetrahedrons with the silicon or aluminum atom located in their center (T atom). Tetrahedrons bond to one another by means of oxygen atoms, forming T-O-T bonds. These are in turn grouped together so as to form the secondary units, which are the basic pillars of zeolites. The different ways of organizing the tetrahedrons and secondary units lead to the different types of cavities and channels, the size of the latter ranging between 0.3-0.9 nm, according to the zeolitic structure in question. In this sense, zeolites are considered molecular sieves since they can discriminate among different species according to their molecular size, a property referred to as shape selectivity. The presence of aluminum in their structure also gives them an acidic character, which is variable according to the structure and amount incorporated. The suitable combination of "shape selectivity" and acidity is responsible for a number of industrial applications for zeolites in catalysis and adsorption. On the other hand, zeolites can incorporate different heteroatoms in their structure, such as Ti, V, Fe, Cr, etc., partially or completely substituting the aluminum atoms, giving them redox properties or allowing them to adjust their acidity.

However, one of the main limitations of zeolites is based precisely on their pore size, which prevents or slows access to the internal active centers when bulky substrates are used as reagents, having dimensions close to or exceeding pore size dimensions. This phenomenon becomes more important when considering that zeolites are usually synthesized in crystal form with a size within the interval of 1-100 µm. Accordingly, the active centers that can be accessed by bulky molecules would mainly be those located on the outer surface, and given the mentioned particle sizes, they would only represent a percentage of less than 1% of the total. The most known case is cracking heavy hydrocarbon fractions in refinery FCC reactors, in which a catalyst consisting of an amorphous silica-alumina and zeolite Y-type matrix is used. Pre-cracking of the heavier molecules, which are subsequently reformed in the zeolitic phase, is carried out in the silica-alumina catalyst ["Introduction to Zeolite Science and Practice". H. Van Bekkum, E. M. Flanigen, P. A. Jacobs, J. C. Jansen (Editors), Elsevier, 2001].

Attempts were already made in the past to improve this situation by developing a secondary mesoporous structure in zeolite Y crystals by means of treatment with water vapor. Nevertheless, the generated mesoporous structure lacked uniformity and the method caused significant deterioration of the zeolitic structure.

New strategies for solving this drawback have been developed in recent years. One strategy consists of using nano-zeolites, which have particle sizes within the interval of 10-200 nm and increased outer surfaces that are fully accessible for bulky substrates. However, the preparation of nano-zeolites has considerable limitations. On one hand, given the usual preparation conditions, yields are lower and they require prolonged synthesis times. Furthermore their preparation is complex, the use of ultracentrifugation being required. On the other hand, since nano-zeolites are prepared at lower temperatures (< 100°C), they are not usually completely crystalline and they are less stable than a conventional sized zeolite.

Another strategy consists of using nano-zeolites as primary particles and building blocks for microporous and/or mesoporous structures that are highly accessible and easy to separate from the synthesis medium due to their larger particle size (in the order of microns). In the process disclosed by Pinnavaia et al. [Pinnavia, T. J.; Zhang, W.; Liu, Y. "Ultrastable porous aluminosilicate structures and compositions derived therefrom", US Patent 20020131930, September 19 2002], nano-zeolite precursors and surfactant molecules (acting as usual templates in preparing mesoporous materials such as MCM-41, MSU, etc.) are jointly added to the synthesis medium, obtaining meso-microporous materials with crystalline walls formed by pseudozeolite structures. A material with a double microporous structure (Silicalite-1 zeogrid) is obtained by means of a similar process consisting of preparing nanoparticles with dimensions of 1.3 x 4 x 4 nm (nanoslabs) and their subsequent fusion in the presence of a surfactant, Kremer et al. [S. P. B. Kremer, C. E. A. Kirschhock, M. Tielen, F. Collignon, P. J. Grobet, P. A. Jacobs, J. A. Martens, "Silicalite-1 Zeogrid: A New Silica Molecular Sieve with Super and Ultra-Micropores", Adv. Funct. Mater. 2002, 12(4), 286] get a material with a micro-porous double structure (silicalite-1zeogrid). The materials in both cases are macroscopically amorphous given the absence of an X-ray diffraction signal at high angles.

Other strategies described in the literature consist of preparing delaminated zeolites [Corma, A.; Fornes, V.; Diaz, U. "Microporous acidic oxide with catalytic properties ITQ-18", European patent EP 1 211 224 (05/06/2002)], although this method is not general for all zeolitic structures, and nano-zeolite synthesis in confined spaces in carbons [Madsen, C.; Jacobsen, C. J. H. "Nanosized zeolite crystals-convenient control of crystal size distribution by confined space synthesis". Chem. Commun. 1999, 673]. This last method does lead to the formation of nano-zeolites with a crystal size of 8-30 nm with clear X-ray diffraction signals. The material also has a secondary mesoporous structure with a mean diameter of 15 nm, resulting from the packing between nano-zeolites. A similar process is also described using carbons, but this time carbon nanotubes are used rather than surfactant molecules as molds for the purpose of preparing mesoporous zeolites with straight channels [Jacobsen, C. J. H.; Konrad, H.; Schmidt, I.; Pehrson, S.; Soren, D. "Method of preparing zeolite single crystals with straight mesopores" European patent EP 1 284 237 (15/08/2001)].

It was therefore necessary to find an alternative process for producing nano-zeolites that were crystalline, easy to separate and with an increased yield.

### Description of the Invention

This need is hereby resolved by means of an alternative process for producing nano-zeolite ZSM-5 with an approximate crystal size between 5-20 nm by means of adding a silylating agent to the synthesis medium, which reacts with the surface hydroxyl groups of the nano-zeolite nuclei, giving rise to the formation of partially silylated surfaces. The silylated nano-zeolite nuclei bond to one another in the areas that are not sterically hindered, giving rise to the formation of agglomerates with controlled sizes within the 100-500 nm interval. The presence of the silylating group hinders crystalline growth by blocking the agglomeration and fusion of the primary nano-zeolite particles to larger particles. Complete nano-zeolite crystallization can thus be obtained by means of hydrothermal treatment at the normal synthesis temperatures of any zeolitic structure (70-200°C). The size of the obtained nano-zeolite aggregates allows their easy separation by centrifugation, obtaining very high synthesis yields (> 75%). Finally, the silylating agent is removed after calcination, leaving behind a primary microporous structure (channels present inside the primary nano-zeolite particles) and secondary micro-mesoporous structure (interparticle spaces freed after combustion of the silylating agent). The nano-zeolite thus obtained is characterized in turn by having a greatly increased outer surface, exceeding 100 m² g⁻¹, depending on the type and amount of silylating agent used:
According to the foregoing, the process according to the invention comprises the following steps:
   a) preparing a synthesis mixture in solution or gel form with a zeolite ZSM-5 precursor composition;
   b) silylating the mixture by the addition of and reaction with a silylating agent at a molar concentration of between 0.1 and 15% in relation to the total silicon and aluminum content;
   c) crystallizing the mixture at 70-200°C;
   d) separating the solid by means of centrifugation, filtration or evaporation of the solvent.
A zeolite ZSM-5 precursor synthesis mixture (gel or solution) is initially prepared, comprising a source of silicon (e.g. a silicon alkoxide such as tetraethylorthosilicate, colloidal silica or amorphous silica), a source of aluminum (e.g. an aluminum alkoxide such as aluminum isopropoxide, aluminum sulfate or aluminum nitrate), an organic compound acting as a zeolite ZSM-5 structure promoting agent (preferably tetrapropylammonium hydroxide or salt), a basic agent (e.g. a hydroxide of an alkaline or alkaline-earth metal such as NaOH, KOH, or, preferably, an organic base, such as tetraalkylammonium hydroxide R₁₋₄NOH, where R₁₋₄ mean alkyl groups (identical or different) and water. The initial composition of the starting gel for the case of zeolite ZSM-5 can be described by means of the following formula:

   Al₂O₃; x SiO₂; y C₁₂H₂₈NOH; z H₂O

   where x = 20 - 100 (preferably 60), y = 11-22, z = 600-1500.

Then the obtained gel is left to age at temperatures between room temperature and 180°C (preferably 70-100°C). This step may, however, be omitted in preparing the material. According to a preferred embodiment, this aging step is carried out in an autoclave.

The silylating agent is finally added at a molar concentration between 0.1-15% in relation to the total silicon and aluminum content of the synthesis medium, reacting with the synthesis gel.

Valid silylating agents correspond to the following general formulas:
a) (R')ₐ(R")_{b}(R"')_{c}-Si(OR₁)_{d}(OR₂)ₑ(OR₃), (0 ≤ a, b, c, d, e, f ≤ 3; a + b + c + d + e + f = 4; 1 ≤ a + b + c ≤ 3) where R', R", R"' mean identical or different aryl, alkyl, aminoalkyl or arylaminoalkyl groups, and where R₁₋₃ mean identical or different alkyl or aryl groups.
b) (R')ₐ(R")_{b}(R"')_{c}-Si(OR₁)_{d}(OR₂)ₑX_{f} (0 ≤ a, b, c, d, e, f ≤ 3; a + b + c + d + e + f = 4; 1 ≤ a + b + c ≤ 3) where R', R", R"' mean identical or different aryl, alkyl, aminoalkyl or arylaminoalkyl groups, R₁₋₂ mean identical or different alkyl or aryl groups, and X represents halide groups (F, Cl, Br, I).
c) (R₁)ₐ(R₂)_{b}(R₃)_{c}(OR₄)_{d}(OR₅)ₑSi-NH-Si(R₆)ₐ(R₇)_{b}(R₈)_{c}(OR₉)_{d}(OR₁₀)ₑ (0 ≤ a, b, c ≤ 3; 1 ≤ a + b + c ≤ 3; a + b + c + d + e = 3), where R₁₋₁₀ mean identical or different alkyl, aryl, aminoalkyl or arylaminoalkyl groups.

The last step of synthesis consists of crystallization of the synthesis mixture obtained after silylation at temperatures between 70 and 200°C. Then the obtained solid is separated and calcined at temperatures between 300 and 800°C, preferably 400-700°C.

Further details are seen in the claims.

The proportion of silylating agent added to the synthesis medium is a key variable of the method, given that high amounts (> 15%) do not lead to obtaining a crystalline material.

The experiments presented below are described in support of particular aspects of the present invention and in no case to limit the scope thereof, and for the purpose of clarifying aspects related to the figures described below which are mentioned in these examples:
Figure 1 shows the X-ray diffractograms of samples SILNZSM-5.0, SILNZSM-5.1, SILNZSM-5.2 and SILNZSM-5.3.
Figure 2 shows the infrared spectra of samples SILNZSM-5.0, SILNZSM-5.1, SILNZSM-5.2 and SILNZSM-5.3.
Figure 3 shows TEM microphotographs of sample SILNZSM-5.1.
Figure 4 shows the ²⁷Al-MAS nuclear magnetic resonance spectrum of the uncalcined sample SILNZSM-5.3.
Figure 5 shows the nuclear magnetic resonance spectrum of ²⁹Si of the uncalcined sample SILNZSM-5.1.

The invention is further explained below based on a series of examples with a non-limiting character on the scope of the invention.

### EXAMPLES

The products obtained in the examples have been called SILNZSM-5.x depending on the silylating agent used, according to the nomenclature indicated below in Table 1. A sample prepared without a silylating agent (SILNZSM.5.0) has been included therein for purposes of comparison.

**TABLE 1 Examples of silylating agents**

| **Sample** | **Silylating agent** |
|---|---|
| SILNZSM.5.0 | None |
| SILNZSM-5.1 | Phenylaminopropyltrimethoxysilane |
| SILNZSM-5.2 | Aminopropyltrimethoxysilane |
| SILNZSM-5.3 | Isobutyltriethoxysilane |

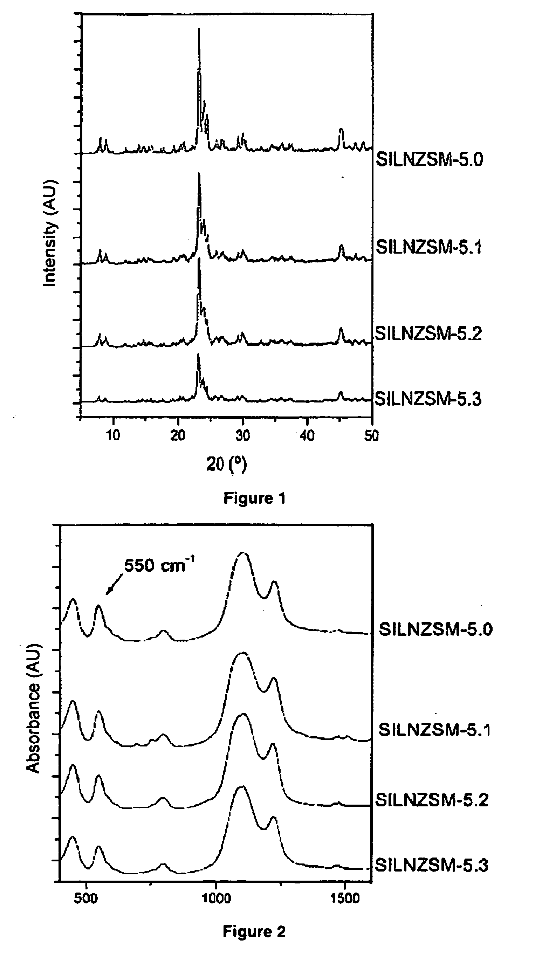

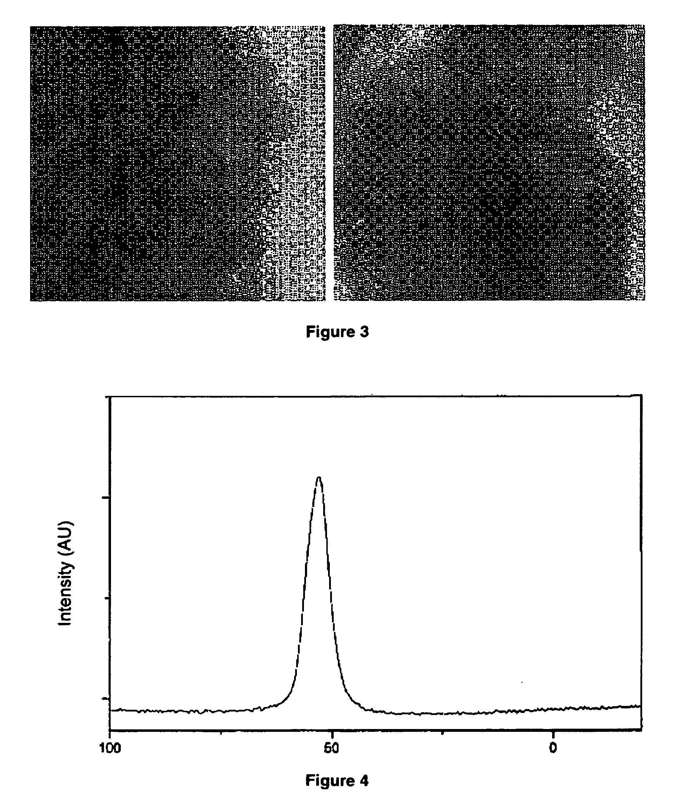

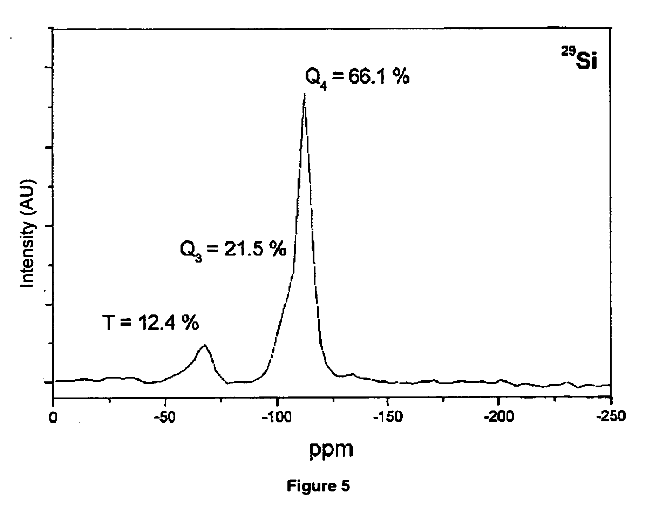

All the products obtained with the various silylating agents are completely crystalline, as confirmed by the X-ray diffraction data (Figure 1), which shows the main diffraction peaks corresponding to zeolite ZSM-5. The infrared spectra (Figure 2) also show at 550 cm⁻¹ the normal signal for the vibration of the pentasil units of this zeolite. The TEM image shows the presence of aggregates between 100 and 500 nm in size formed by primary zeolite particles of 5-20 nm (Figure 3). The ²⁷Al nuclear magnetic resonance spectrum of the uncalcined SILNZSM-5.3 sample (Figure 4) confirms the complete incorporation of the aluminum to the structure given that only one peak located at 54 ppm corresponding to tetrahedral aluminum (incorporated to the structure) is observed. The ²⁹Si-MAS nuclear magnetic resonance spectrum of the uncalcined samples (Figure 5) likewise confirms the incorporation of the silylating agent to the structure given that a signal located at about -70 ppm corresponding to T bands (Si-C bonds) is observed.

Table 2 summarizes the obtained yields as well as the main textural properties of the samples prepared with the different silylating agents. Synthesis yields equal to or greater than 80% were obtained in all cases. The silylating agents leading to the formation of nano-zeolite ZSM-5 with increased outer surface values (>200 m² g⁻¹) are those incorporating bulky substituents due to the occurrence of greater steric hindrances in relation to the agglomeration.

**TABLE 2 Yields and textural properties of the calcined samples**

| Sample | % silylating agent | Yield (%) | BET surface area (m² g⁻¹) | Outer surface (m² g⁻¹) | Micropore volume (cm³ g⁻¹) |
|---|---|---|---|---|---|
| SILNZSM-5.0 | 0 | 67 | 445 | 109 | 0.144 |
| SILNZSM-5.1 | 5 | 80 | 579 | 273 | 0.130 |
| SILNZSM-5.2 | 5 | 95 | 488 | 191 | 0.129 |
| SILNZSM-5.3 | 5 | 83 | 558 | 295 | 0.112 |

### EXAMPLE 1

### Synthesis of nano-crystalline ZSM-5 having increased outer surface by means of silylation with isobutyltriethoxysilane

1.149 g of aluminum isopropoxide (AIP), 15 g of 40% tetrapropylammonium hydroxide (TPAOH) in water and 65 g of deionized water were placed in a beaker. It was vigorously stirred at 0°C for 2 hours.

35 g of 98% tetraethylorthosilicate (TEOS) were added to the beaker.

After aging for 40 hours at room temperature and under vigorous stirring, 32.7 g of the mixture were removed by evaporation, obtaining a synthesis gel with a molar composition of:
Al₂O₃ : 60 SiO₂ : 11.5 TPAOH : 1500 H₂O

The gel was maintained at 90°C for 20 hours with reflux and stirring at 100 rpm.

1.8120 g of isobutyltriethoxysilane were added and the silylation reaction was carried out for 6 hours at 90°C with reflux and stirring at 100 rpm.

The resulting product was crystallized in a sealed Teflon-lined autoclave under autogenous pressure and 170°C for 5 days.

The obtained solid was separated from the crystallization mother liquor by means of centrifugation at 12000 rpm for 0.5 hours, washed with deionized water and dried at 110°C for 20 hours.

The dry solid was calcined at 550°C in a static air atmosphere for 5 hours.

The calcined solid was analyzed by means of N₂ adsorption at 77 K, obtaining a BET surface are of 558 m²/g, 295 m²/g of which correspond to outer surface (calculated by means of the t-plot method). The X-ray diffractogram and infrared spectrum of the uncalcined solid as well as the ²⁷Al nuclear magnetic resonance spectrum of the uncalcined sample are shown in Figures 1, 2 and 4, respectively (sample SILNZSM-5.3).

### EXAMPLE 2

### Synthesis of nano-crystalline ZSM-5 having increased outer surface by means of silylation with phenylaminopropyltrimethoxysilane

1.149 g of aluminum isopropoxide (AIP), 15 g of 40% tetrapropylammonium hydroxide (TPAOH) in water and 65 g of deionized water were placed in a beaker. It was stirred vigorously at 0°C for 2 hours.

35 g of 98% tetraethylorthosilicate (TEOS) were added to the beaker.

After aging for 40 hours at room temperature and under vigorous stirring, 32.7 g of the mixture were removed by evaporation, obtaining a synthesis gel with a molar composition of:
Al₂O₃ : 60 SiO₂ : 11.5 TPAOH : 1500 H₂O

The gel was maintained at 90°C for 20 hours with reflux and stirring at 100 rpm.

1.9703 g of phenylaminopropyltrimethoxysilane were added and the silylation reaction was carried out for 6 hours at 90°C with reflux and stirring at 100 rpm.

The resulting product was crystallized in a sealed Teflon-lined autoclave under autogenous pressure and 170°C for 5 days.

The obtained solid was separated from the crystallization mother liquor by means of centrifugation at 12000 rpm for 0.5 hours, washed with deionized water and dried at 110°C for 20 hours.

The dry solid was calcined at 550°C in a static air atmosphere for 5 hours.

The X-ray diffractogram and infrared spectrum of the uncalcined material are shown in Figures 1 and 2, respectively (sample SILNZSM-5.1). The ²⁹Si nuclear magnetic resonance spectrum of the uncalcined sample is shown in Figure 5. It has been calculated from the N₂ adsorption-desorption isotherm at 77 K that the BET surface area of the sample is 579 m²/g, 273 m²/g of which correspond to the outer surface (calculated by the t-plot method).

## Claims

1. A process for preparing nano-zeolite ZSM-5 having an increased outer surface by means of crystallization of silylated nuclei, **characterized in that** it comprises the following steps:
a) preparing a synthesis mixture in solution or gel form with a zeolite ZSM-5 precursor composition;
b) silylating the mixture by the addition of and reaction with a silylating agent at a molar concentration of between 0.1 and 15% in relation to the total silicon and aluminum content;
c) crystallizing the mixture at 70-200°C;
d) separating the solid by means of centrifugation, filtration or evaporation of the solvent.

2. A process according to any of the previous claims, **characterized in that** the zeolite ZSM-5 precursor composition comprises a source of silicon, a source of aluminum, a basic agent and a structure promoting agent.

3. A process according to any of claims 1 and 2, **characterized in that** it comprises an additional step of aging said mixture by treatment at a temperature between room temperature and 180°C after step a).

4. A process according to any of claims 1 to 3, **characterized in that** it comprises an additional calcination step at 300-800°C after step d).

5. A process according to any of claims 1 to 4, **characterized in that** the silylating agent corresponds to general formula (R')ₐ(R")_{b}(R'")_{c}-Si(OR₁)_{d}(OR₂)ₑ(OR₃)_{f} wherein
0 ≤ a, b, c, d, e, f ≤ 3; a + b + c + d + e + f = 4; 1 ≤ a + b + c ≤ 3,
R', R", R"' mean identical or different aryl, alkyl, aminoalkyl or arylaminoalkyl groups, and
R₁₋₃ mean identical or different alkyl or aryl groups.

6. A process according to any of claims 1 to 4, **characterized in that** the silylating agent corresponds to general formula (R')ₐ(R")_{b}(R'")_{c}-Si(ORi)_{d}(OR₂)ₑX_{f},
wherein
0 ≤ a, b, c, d, e, f ≤ 3; a + b + c + d + e + f = 4; 1 ≤ a + b + c ≤ 3,
R', R", R"' mean identical or different aryl, alkyl, aminoalkyl or arylaminoalkyl groups,
R₁₋₂ mean identical or different alkyl or aryl groups, and
X represents halide groups.

7. A process according to any of claims 1 to 4, **characterized in that** the silylating agent corresponds to general formula (R₁)ₐ(R₂)_{b}(R₃)_{c}(OR₄)_{d}(OR₅)ₑSi-NH-Si(R₆)ₐ(R₇)_{b}(R₈)_{c}(OR₉)_{d}(OR₁₀)ₑ.
wherein
0 ≤ a, b, c ≤ 3; 1 ≤ a + b + c ≤ 3; a + b + c + d + e = 3,
R₁₋₁₀ mean identical or different alkyl or aryl groups.

8. A process according to any of the previous claims, **characterized in that** the source of silicon is selected from the group consisting of fumed silica, colloidal silica, sodium silicate, silicic acid and silicon alkoxides Si (OR₁)ₓ(OR₂)_{y}(OR₃)_{z}(OR₄)_{f}, wherein R₁₋₄ means identical or different alkyl or aryl groups, and wherein 0 ≤ x,y,z,f ≤ 4 and x+y+z+f = 4.

9. A process according to any of the previous claims, **characterized in that** the source of aluminum is selected from the group formed by aluminum flakes, aluminum sulfate, aluminum nitrate, pseudoboehmite and aluminum alkoxides Al(OR₁)ₓ(OR₂)_{y}(OR₃)_{z}, wherein R₁₋₃ mean identical or different alkyl or aryl groups, and wherein x+y+z = 3, 0 ≤ x,y,z ≤ 3.

10. A process according to any of the previous claims, **characterized in that** the basic agent is an alkaline or alkaline-earth metal hydroxide or an organic base.

11. A process according to claim 10, **characterized in that** the organic base is a tetraalkylammonium hydroxide R₁₋₄ NOH, wherein R₁₋₄ means identical or different alkyl groups.

12. A process according to any of the previous claims, **characterized in that** the structure promoting agent is a tetrapropylammonium salt.

## Patentansprüche

1. Verfahren zur Herstellung von Nano-Zeolith ZSM-5 mit vergrößerter Außenoberfläche durch Kristallisation von silylierten Keimen, **dadurch gekennzeichnet, dass** es die folgenden Schritte umfasst:
a) Herstellen einer Synthesemischung in Lösungs- oder Gelform mit einer Zeolith ZSM-5-Vorläuferzusammensetzung;
b) Silylieren der Mischung durch Zugabe von und Reaktion mit einem Silylierungsmittel bei einer molaren Konzentration von zwischen 0,1 und 15% im Verhältnis zum gesamten Silizium- und Aluminiumgehalt;
c) Kristallisieren der Mischung bei 70-200°C;
d) Trennen- des Feststoffs durch Zentrifugation, Filtration oder Verdampfung des Lösungsmittels.

2. Verfahren nach einem der vorherigen Ansprüche, **dadurch gekennzeichnet, dass** die Zeolith ZSM-5-Vorläuferzusammensetzung eine Siliziumquelle, eine Aluminiumquelle, ein basisches Mittel und ein strukturförderndes Mittel umfasst

3. Verfahren nach einem der Ansprüche 1 und 2, **dadurch gekennzeichnet, dass** es einen zusätzlichen Schritt zur Alterung der genannten Mischung umfasst, indem sie bei einer Temperatur zwischen Raumtemperatur und 180°C nach Schritt a) behandelt wird.

4. Verfahren nach einem der Ansprüche 1 bis 3, **dadurch gekennzeichnet, dass** es einen zusätzlichen Kalzinierungsschritt bei 300-800°C nach Schritt d) umfasst.

5. Verfahren nach einem der Ansprüche 1 bis 4, **dadurch gekennzeichnet, dass** das Silylierungsmittel der allgemeinen Formel (R')ₐ(R")_{b}(R'")_{c}-Si(OR₁)_{d}(OR₂)ₑ(OR₃)_{f} entspricht, wobei
0 ≤ a, b, c, d, e, f ≤ 3; a + b + c + d + e + f = 4; 1 ≤ a + b + c ≤ 3,
R', R", R'" identische oder verschiedene Aryl-, Alkyl-, Aminoalkyl- oder Arylaminoalkylgruppen bezeichnen, und
R₁₋₃ identische oder verschiedene Alkyl- oder Arylgruppen bezeichnen.

6. Verfahren nach einem der Ansprüche 1 bis 4, **dadurch gekennzeichnet, dass** das Silylierungsmittel der allgemeinen Formel (R')ₐ(R")_{b}(R'")_{c}-Si(OR₁)_{d}(OR₂)ₑX_{f} entspricht,
wobei0 ≤ a, b, c, d, e, f ≤ 3; a + b + c + d + e + f = 4; 1 ≤ a + b + c ≤ 3,
R', R", R'" identische oder verschiedene Aryl-, Alkyl-, Aminoalkyl- oder Arylaminoalkylgruppen bezeichnen,
R₁₋₂ identische oder verschiedene Alkyl- oder Arylgruppen bezeichnen, und
X für Halogenidgruppen steht.

7. Verfahren nach einem der Ansprüche 1 bis 4, **dadurch gekennzeichnet, dass** das Silylierungsmittel der allgemeinen Formel (R₁)ₐ(R₂)_{b}(R₃)_{c}(OR₄)_{d}(OR₅)ₑSi-NH-Si(R₆)ₐ(R₇)_{b}(R₈)_{c}(OR₉)_{d}(OR₁₀)ₑ entspricht,
wobei
0 ≤ a, b, c ≤ 3; 1 ≤ a + b + c ≤ 3; a + b + c + d + e = 3,
R₁₋₁₀ identische oder verschiedene Alkyl- oder Arylgruppen bezeichnen.

8. Verfahren nach einem der vorherigen Ansprüche, **dadurch gekennzeichnet, dass** die Siliziumquelle aus der Gruppe ausgewählt wird, die aus pyrogenem Silica, kolloidalem Silica, Natriumsilikat, Kieselsäure und Siliziumalkoxiden Si (OR₁)ₓ(OR₂)_{y}(OR₃)_{z}(OR₄)_{f} besteht, wobei R₁₋₄ identische oder verschiedene Alkyl- oder Arylgruppen bezeichnet, und wobei 0 ≤ x, y, z, f ≤ 4 und x + y + z + f = 4.

9. Verfahren nach einem der vorherigen Ansprüche, **dadurch gekennzeichnet, dass** die Aluminiumquelle aus der Gruppe ausgewählte wird, die aus Aluminiumflocken, Aluminiumsulfat, Aluminiumnitrat, Pseudoboehmit und Aluminiumalkoxiden Al(OR₁)ₓ(OR₂)_{y}(OR₃)_{z} besteht, wobei R₁₋₃ identische oder verschiedene Alkyl- oder Arylgruppen bezeichnen, und wobei x + y + z = 3, 0 ≤ x, y, z ≤ 3.

10. Verfahren nach einem der vorherigen Ansprüche, **dadurch gekennzeichnet, dass** das basische Mittel ein Alkali- oder Erdalkalimetallhydroxid oder eine organische Base ist.

11. Verfahren nach Anspruch 10, **dadurch gekennzeichnet, dass** die organische Base ein Tetraalkylammoniumhydroxid R₁₋₄ NOH ist, wobei R₁₋₄ identische oder verschiedene Alkylgruppen bezeichnet.

12. Verfahren nach einem der vorherigen Ansprüche, **dadurch gekennzeichnet, dass** das strukturfördernde Mittel ein Tetrapropylammoniumsalz ist.

## Revendications

1. Procédé pour préparer des nanozéolites ZSM-5 ayant une surface extérieure accrue au moyen de cristallisation de noyaux sylilés, **caractérisé en ce qu'**il comprend les étapes suivantes :
a) préparer un mélange de synthèse sous forme de solution ou de gel avec une composition de précurseur de zéolite ZSM-5
b) syliler le mélange par l'addition de, et la réaction avec, un agent de sylilation à une concentration molaire entre 0,1 et 15% par rapport au contenu total en silicium et en aluminium
c) cristalliser le mélange a 70-200°C
d) séparer le solide au moyen de centrifugation, filtration ou évaporation du solvant.

2. Procédé selon l'une quelconque des revendications précédentes, **caractérisé en ce que** la composition de précurseur de zéolite ZSM-5 comprend une source de silicium, une source d'aluminium, un agent basique et un agent promoteur de structure.

3. Procédé selon l'une quelconque des revendications 1 et 2, **caractérisé en ce qu'**il comprend une étape additionnelle de vieillissement dudit mélange par traitement à une température entre la température ambiante et 180°C après l'étape a).

4. Procédé selon l'une quelconque des revendications 1 à 3, **caractérisé en ce qu'**il comprend une étape de calcination additionnelle à 300-800°C après l'étape d).

5. Procédé selon l'une quelconque des revendications 1 à 4, **caractérisé en ce que** l'agent de silylation correspond à la formule générale
(R')ₐ(R")_{b}(R"')_{c}-Si(OR₁)_{d}(OR₂)ₑ(OR₃)_{f}
dans laquelle
0 ≤ a, b, c, d, e, f ≤3 ; a + b + c + d + e + f = 4 ; 1 ≤a + b + c ≤3,
R', R", R"' signifie des groupes aryle, alkyle, aminoalkyle ou arylaminoalkyle identiques ou différents, et
R₁₋₃ signifie des groupes alkyle ou aryle identiques ou différents.

6. Procédé selon l'une quelconque des revendications 1 à 4, **caractérisé en ce que** l'agent de sylilation correspond à la formule générale
(R')ₐ(R")_{b}(R'")_{c}-Si(OR₁)_{d}(OR₂)ₑX_{f},
dans laquelle
0 ≤a, b, c, d, e, f ≤3 ; a + b + c + d + e + f = 4; 1 ≤a + b + c ≤3,
R', R", R'" signifie des groupes aryle, alkyle, aminoalkyle ou arylaminoalkyle identiques ou différents,
R₁₋₂ signifie des groupes alkyle ou aryle identiques ou différents, et
X représente des groupes halogénure.

7. Procédé selon l'une quelconque de revendication 1 à 4, **caractérisé en ce que** l'agent de sylilation correspond à la formule générale
(R₁)ₐ(R₂)_{b}(R₃)_{c}(OR₄)_{d}(OR₅)ₑSi-NH-Si(R₆)ₐ(R₇)_{b}(R₈)_{c}(OR₉)_{d}(OR₁₀)ₑ,
dans laquelle
0 ≤a, b, c ≤3; 1 ≤a+b+c ≤3;a+b+c+d+e=3
R₁₋₁₀ signifie des groupes aryle ou alkyle identiques ou différents.

8. Procédé selon l'une quelconque des revendications précédentes, **caractérisé en ce que** la source de silicium est sélectionnée parmi le groupe constitué par la silice fumée, silice colloïdale, silicate de sodium, acide silicique et les alkoxydes de silicium Si(OR₁)ₓ(OR₂)_{y}(OR₃)_{z}(OR₄)_{f}, dans laquelle R₁₋₄ signifie des groupes alkyle ou aryle différentes ou identiques, et dans laquelle 0 ≤x, y, z, f ≤4 et x+y+z+f =4.

9. Procédé selon l'une quelconque des revendications précédentes, **caractérisé en ce que** la source d'aluminium est sélectionnée parmi le groupe formé par de copeaux d'aluminium, du sulfate d'aluminium, du nitrate d'aluminium, des alkoxydes de pseudoboehmite et d'aluminium Al(OR₁)ₓ(OR₂)_{y}(OR₃)_{z}, dans laquelle R₁₋₃ signifie des groupes alkyle ou aryle différentes ou identiques, et dans laquelle x+y+z = 3, 0 ≤x,y,z ≤3.

10. Procédé selon l'une quelconque des revendications précédentes, **caractérisé en ce que** l'agent basique est un hydroxyde de métal alcalin ou de métal alcalinoterreux ou une base organique.

11. Procédé selon la revendication 10, **caractérisé en ce que** la base organique est un hydroxyde de tétraalkylammonium R₁₋₄NOH, dans lequel R₁₋₄ signifie des groupes alkyle différents ou identiques.

12. Procédé selon l'une quelconque des revendications précédentes, **caractérisé en ce que** l'agent promoteur de structure est un sel de tétrapropylammonium.
